# EUROPÄISCHE PATENTSCHRIFT

(11) **EP 0 779 469 B1**
(45) Veröffentlichungstag und Bekanntmachung des Hinweises auf die Patenterteilung: **13.08.2003**
(21) Anmeldenummer: 96118418.1
(22) Anmeldetag: 16.11.1996
(51) Int. Cl.: F17C 9/00, B60K 15/03

(54) **Einrichtung zum Versorgen eines Verbrauchers mit Kryokraftstoff aus einem Kryotank**
Device for supplying a consumer with crygenic fuel from a cryotank
Dispositif pour fournir un consommateur en carburant cryogénique provenant d'un réservoir cryogénique

(30) Priorität: 14.12.1995 DE 19546617
(43) Veröffentlichungstag der Anmeldung: 18.06.1997
(73) Patentinhaber: Messer Griesheim GmbH, 65933 Frankfurt am Main (DE)
(72) Erfinder: Fieseler, Heinrich, 41541 Dormagen (DE); Hettinger, Wolfgang, 50769 Köln (DE); Kesten, Martin, Dr., 51503 Rösrath (DE); Ott, Peter, Dr., 63110 Rodgau (DE)

(56) Entgegenhaltungen:
- WO-A-91/02916
- DE-A- 1 601 100
- FR-A- 1 602 987
- GB-A- 852 565

## Beschreibung

Die Erfindung betrifft eine Einrichtung zum Versorgen eines Verbrauchers mit Kryokraftstoff aus einem Kryotank nach dem Oberbegriff des Anspruchs 1.

Kryokraftstoffe gewinnen aufgrund des gestiegenen Energiebedarfs und der steigenden Umweltbelastung durch konventionelle Energieträger zunehmend an Bedeutung. Aus Gründen der Speicherkapazität wird der Kryokraftstoff dabei als tiefkaltes verflüssigtes Gas in einem doppeiwandigen, isolierten Kryotank gespeichert. Mit dieser Speicherung kommt man am ehesten in die Nähe der Speicherung konventioneller Kraftstofftanks.

Der im Kryotank gespeicherte flüssige Kryokraftstoff muß den Verbrauchern, beispielsweise Kraftfahrzeugmotoren, als Gas bei 2 bis 4 bar Überdruck zur Verfügung gestellt werden. Die Verdampfung des tiefkalten, verflüssigten Kryokraftstoffs erfolgt dabei in einem Wärmetauscher, dem das Motorkühlwasser als Wärmeträger zugeführt wird. Der entsprechende Druck des Kryokraftstoffs wird während des Fahrbetriebs im Inneren des Kryotanks aufgebaut. Eine bekannte Ausführung besteht im Einbau einer Heizung im Innenbehälter, mittels der ein Teil des flüssigen Kryokraftstoffs verdampft wird. Der gasförmige Kryokraftstoff sammelt sich oberhalb des Niveaus des flüssigen Kryokraftstoffes im Gasraum des Kryotanks. Gasdrücke die oberhalb des für den Betrieb erforderlichen Gasdruckes liegen werden bei ungenauer Regelung mit der in dem flüssigen Kryokraftstoff angeordneten Heizung erzeugt oder entstehen bei längerer Standzeit durch Wärmeeintrag in den Kryotank.

Beispielsweise ist aus der gattungsbildenden Durchschrift WO 91 02916 A ein Multifunktionsventil mit zwei über druckgesteuerte Schließmittel miteinander verbundenen Kammern bekannt, welches auch als Druckregler in der Versorgungsleitung eines Flüssiggastanks angeordnet sein kann.

Weiterhin zeigt GB 852 565 A ein, beispielsweise zu Atmungszwecken in einem Flugzeug gedachtes Gasversorgungssystem auf, welches aus einem Flüssiggasbehälter und aus unterschiedlichen, in der Versorgungsleitung angeordneten, zum Druckaufbau zwischen der Flüssigphase und der Gasphase eingesetzten Ventilen besteht.

Der vorliegenden Erfindung liegt die Aufgabe zugrunde, eine einfache und kompakt aufgebaute Einrichtung anzugeben, mit der wahlweise einem Kryotank flüssiger oder gasförmiger Kryokraftstoff entnommen werden kann.

Ausgehend von dem im Oberbegriff des Anspruchs 1 genannten Stand der Technik ist diese Aufgabe gelöst mit den im kennzeichnenden Teil des Anspruchs 1 angegebenen Merkmalen.

Vorteilhafte Weiterbildungen der Erfindung sind in den Unteransprüchen angegeben.

Durch die erfindungsgemäße selbstregelnde Entnahme von flüssigem oder gasförmigem Kryokraftstoff entfällt eine aufwendige, teure und störanfällige Steuerung, da über den sich im Gasraum des Kryotanks einstellenden Gasdruck das druckabhängige Steuerorgan automatisch von der Entnahme des flüssigen Kryokraftstoffes auf die Entnahme des gasförmigen Kryokraftstoffes oder umgekehrt umschaltet. Dadurch kann die durch das Heizsystem verursachte Nachverdampfung regeltechnisch vernachlässigt werden, da der gasförmige Kryokraftstoff dem Verbraucher als Energieträger zugeführt wird und nicht über die Sicherheitsventilleitung in die Atmosphäre abgeblasen wird.

Eine Ausgestaltung der erfindungsgemäßen Einrichtung sieht zwei druckgesteuerte Steuerorgane vor, die jeweils über eine Leitung mit der Gas- und Flüssigphase des Kryokraftstoffes verbunden sind. Die jeweils mit einem Steuerorgan verbundenen Leitungen stehen mit der Flüssig- bzw. Gasphase in voneinander entfernten Bereichen des Innenbehälters in Verbindung. Beiden druckgesteuerten Steuerorganen sind von einer einfachen Steuerung ansteuerbare Schaltorgane (Absperrventile) zugeordnet, mittels denen die eine oder andere zur Versorgungsleitung führende Verbindungsleitung in Abhängigkeit von der dem Kryotank entnehmbaren Gas- oder Flüssigphase freigegeben wird. Bei flachen und relativ langen Kryotanks, die zum Beispiel auf dem Fahrzeugdach von Bussen angeordnet sind, kann so über Füllstandssensoren auch bei Schrägstellung des Kryotanks der Verbraucher mit gasförmigen oder flüssigem Kryokraftstoff versorgt werden.

Durch die Merkmale der Ansprüche 8 bis 11 sind die Schalt- und Steuerorgane in einer ausreichend dichten und explosionsgeschützten Umhüllung untergebracht, die eine Installation im Fahrgastraum - zu dem auch der Kofferraum zählt - ermöglicht. Dadurch daß der Vakuumbehälter mit den Schalt- und Steuerorganen unlösbar mit dem Außenbehälter verbunden ist, werden alle druckgasbeaufschlagten Komponenten der Einrichtung innerhalb des Fahrzeuges mit einem geschlossenen Vakuumraum umgeben, welcher eine sehr hohe Dichtheit besitzt. Manipulationen von unberechtigten Personen sind durch die "in" den Kryotank integrierten Schalt- und Steuerorgane ausgeschlossen. Durch den, dem Außenboden des Kryotanks vorgelagerten Vakuumbehälter, wird die einfallende Wärme über die von den Schalt- und Steuerorganen zu dem Innenbehälter geführten Befüll- und Versorgungsleitungen und über die Lagerelemente reduziert und dadurch die Isoliergüte verbessert, weil die Leitungsdurchführungen und die Lagerung zwischen dem Innen- und Außenbehälter als Verlängerung des Weges für die Wärmeeinströmung verantwortlich sind. Bei flachen und relativ langen Kryotanks mit beidseitigen Vakuumbehältem wird dieser Effekt hinsichtlich der Isoliergüte vergrößert.

Dies hat zur Folge, daß die Regelfrequenz der druckgesteuerten Steuerorgane minimiert wird.

Die Zeichnungen veranschaulichen Ausführungsbeispiele der Erfindung.

Es zeigen:
- Figur 1:: eine Gesamtdarstellung des Kryokraftstoffsystems mit der Einrichtung nach der Erfindung in schematischer Darstellung
- Figur 2:: eine schematische Darstellung des druckgesteuerten Steuerorgans im Schnitt.

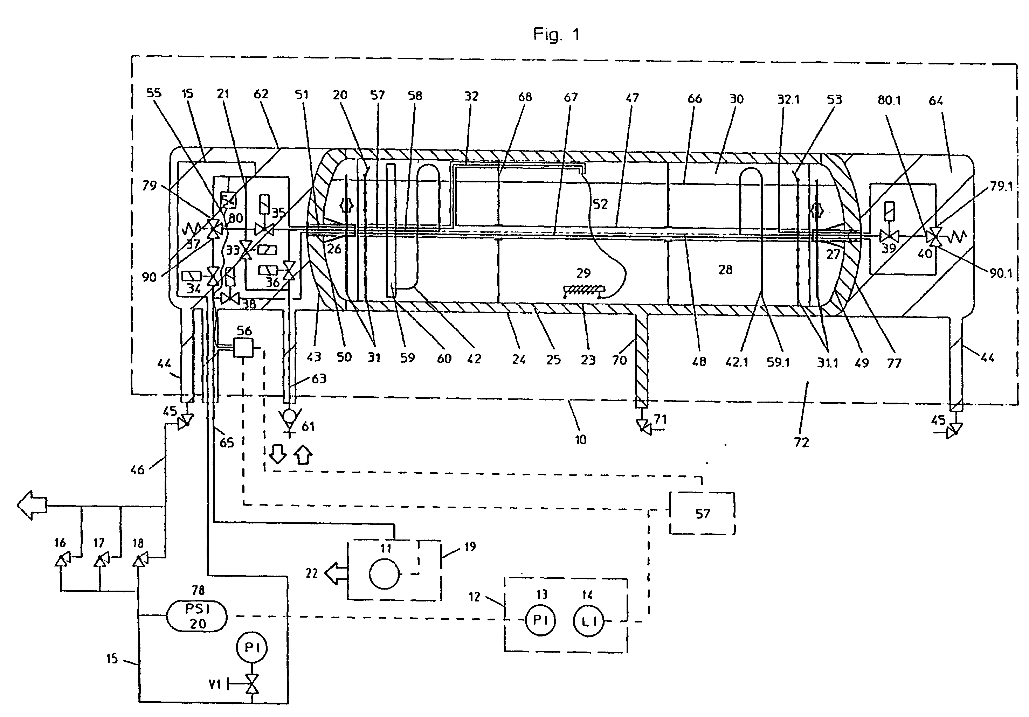

Das in Figur 1 schematisch dargestellte Gesamtschema zeigt im wesentlichen die im Fahrgastraum 72 angeordnete Einrichtung 10 zum Aufbewahren von tiefkaltem verflüssigtem Gas (Kryokraftstoff), die im Cockpit 12 vorgesehenen Anzeigen 13, 14, die aus dem Fahrgastraum 72 herausgeführte Sicherheitsventilleitung 15 mit den Sicherheitsventilen 16, 17, 18 und die im Motorraum angeordnete Verdampfereinheit 19 deren Ausgang 22 mit dem nicht näher dargestellten Motor eines Kraftfahrzeuges verbunden ist. Die Verdampfereinheit 19 ist in der DE 195 06 487.9 näher beschrieben und wird daher nur soweit erläutert, wie es im Zusammenhang mit der Einrichtung 10 erforderlich ist.

Die Einrichtung 10 besteht aus einem Außenbehälter 24 und einem Innenbehälter 23, der innerhalb des Außenbehälters 24 über Lagerelemente 26, 27 so angeordnet ist, daß zwischen beiden Behältern ein den Innenraum umschließender auf 10⁻³ bis 10⁻⁷ mbar evakuierter Isolationsraum 25 vorhanden ist. Der Isolationsraum 25 ist zusätzlich mit schlecht wärmeleitendem Material, beispielsweise Superisolation, ausgefüllt. In dem Innenbehälter wird der tiefkalte verflüssigte Kryokraftstoff 28 aufbewahrt, während der Außenbehälter 24 der Umgebungstemperatur von beispielsweise 20°C ausgesetzt ist. In dem Innenbehälter 23 ist im tiefkalten verflüssigten Kryokraftstoff 28 eine Widerstandsheizung 29 angeordnet. Mit der Widerstandsheizung 29 wird zum Druckaufbau ein Teil des tiefkalten verflüssigten Kryokraftstoffes 28 verdampft. Der verdampfte Kryokraftstoff strömt durch den tiefkalten verflüssigten Kryokraftstoff 28 in den Gasraum 30. Über mindestens einen im Innenbehälter 23 angeordneten Füllstandssensor 31, beispielsweise eine Widerstandskette oder ein Schwimmer, wird der Füllstand des tiefkalt verflüssigten Kryokraftstoffes 28 im Innenbehälter 23 erfaßt und im Cockpit 12 über die Anzeige 14 visualisiert.

Über Leitung 32 wird gasförmiger Kryokraftstoff aus dem Gasraum 30 des Innenbehätters 23 zu einem außerhalb des Außenbehälters 24 angeordneten ersten Steuerorgan 37 und zu einem dem Steuerorgan 37 nachgeschalteten Schaltorgan 34 geführt. Hierzu ist die Leitung 32 mit ihrem einem Ende im Gasraum 30 des Kryobehälters angeordnet und mit ihrem anderen Ende an einem ersten Eingang 79 des Steuerorgans 37 angeschlossen. Über eine weitere Leitung 42 wird tiefkalter verflüssigter Kryokraftstoff 28 aus dem Kryobehälter dem Steuerorgan 37 zugeführt. Hierzu ist die Leitung 42 mit ihrem einem Ende im tiefkalten verflüssigten Kraftstoff 28 im Kryobehälter angeordnet und mit ihrem anderen Ende mit einem zweiten Eingang 80 des Steuerorgans 37 verbunden. Über die Leitung 32 wird GH₂ beziehungsweise GNG und über die Leitung 42 LH₂ beziehungsweise LNG der Verdampfereinheit 19 zugeführt. In der Verdampfereinheit 19 wird das LH₂ beziehungsweise LNG verdampft. Das verdampfte GH₂ beziehungsweise GNG strömt über Ausgang 22 zu dem Motor.

Die Schaltorgane 33 bis 36, 38, 39 und die Steuerorgane 37 und 40 sind in einem Vakuumbehälter 62 angeordnet, der an einem Außenboden 43 des Außenbehälters 24 befestigt ist. Der Außenboden 43 des Außenbehälters 24 begrenzt dabei eine Seite des Vakuumbehälters 62. Der Vakuumraum des Vakuumbehälters 62 ist auf kleiner 10⁻¹ mbar evakuiert und erstreckt sich bis außerhalb des Fahrgastraumes 72 auf die vakuumisolierte Befüll- und Versorgungsleitung 63, 65 und die Sicherheitsventilleitung 15.

Über eine Abzweigleitung 21 ist die Befüllleitung 63 mit der gasführenden Leitung 32 verbunden. In der Abzweigleitung 21 ist das mittels elektrischer oder elektro-magnetischer Signale ansteuerbare Schaltorgan 33 angeordnet. Zwischen der Abzweigleitung 21 und dem Schaltorgan 35 ist in der Befüllleitung 63 das mittels elektrischer oder elektro-magnetischer Signale ansteuerbare Schaltorgan 36 angeordnet. Über die Abzweigleitung 21 und die Befüllleitung 63 wird die Befüllung des nicht näher beschriebenen Kryotanks vorgenommen. Die Steuerorgane 33, 36 sind außerhalb des Tankvorganges stromlos und daher geschlossen.

Über eine Vakuumleitung 44 ist der Vakuumbehälter 62 außerhalb des Fahrgastraumes 72 mit einem Vakuumsicherheitsventil 45 verbunden. Bei Leckagen an den Leitungen 32, 42 strömt das kryogene Gas in den Vakuumraum des Vakuumbehälters 62. Erreicht der Vakuumraum des Vakuumsbehälters 62 einen geringfügigen Überdruck gegenüber dem Umgebungsdruck öffnet das Vakuumsicherheitsventil 45 und das Abgas wird über Leitung 46 gefahrlos aus dem Fahrgastraum 72 geleitet. Zur Sicherung des Außenbehälters 24 gegen Druckanstieg in dem Isolationsraum 25 ist eine mit dem Isolationsraum 25 verbundene Vakuumleitung 70 aus dem Fahrgastraum 72 herausgeführt und außerhalb des Fahrgastraumes 72 mit einem Vakuumsicherheitsventil 71 verbunden.

Die Leitung 42 und die mit ihrem Ende in den Gasraum 30 mündende Leitung 32 sind in einem Schutzrohr 47 angeordnet, welches koaxial oder konzentrisch zur Längsachse 48 des Kryobehälters verläuft.
Das Schutzrohr 47 ist mit den beiden Innenböden 49, 50 des Innenbehälters unlösbar verbunden, vorzugsweise verschweißt. Der Innenraum des Schutzrohres 47 steht über die Öffnung 51 mit dem Isolationsraum 25 in Verbindung. Die Leitungen 32, 42 treten mit ihrem einen Ende durch im Schutzrohr 47 vorgesehene Bohrungen in den Innenbehälter 23.
Die Leitungen 32 und 42 sind mit dem Schutzrohr 47 gasdicht verschweißt. Über die Öffnung 51 treten die Leitungen 32, 42 mit ihrem anderen Ende in den Isolationsraum 25 und über mindestens eine Leitungsdurchführung, beispielsweise Bohrungen, durch den Außenboden 43 des Kryobehälters in den Vakuumbehälter 62. Die Leitungen 32, 42 sind gasdicht mit dem Außenboden 43 verschweißt. Bei der zentrischen Anordnung des Schutzrohres 47 verlaufen die Leitungen 32, 42 vorteilhaft durch die Lagerelemente 26, 27, was die Isolierung des I-solationsraumes 25 mit Superisolation vereinfacht. In der gasführenden Leitung 32 werden die elektrischen Leitungen 20, 52, 53 bis in den Vakuumraum des Vakuumbehälters 62 geführt. Aus Übersichtsgründen ist nur die elektrische Leitung 52 der Heizung 29 schematisch in der gasführenden Leitung 32 dargestellt. Über Leitungsdurchführung treten die elektrischen Leitungen aus der gasführenden Leitung 32 aus und in die erste Steckverbindung 54 ein. Die elektrische Steckverbindung 54 ist im Vakuumbehälter 62 angeordnet. Über Verbindungsleitungen 55 ist die Steckverbindung 54 an eine außerhalb des Vakuumbehälters 62 angeordnete zweite elektrische Steckverbindung 56 angeschlossen. Die Steckverbindungen 54 und 56 verschließen die Leitungsdurchführungen der Leitung 32 bzw. des Vakuumraumes 62. Die Steckverbindungen 54, 56 bestehen aus einer Steckdose und einem Stecker, die miteinander verbindbar sind. Über eine Leitung ist die Steckverbindung 56 mit dem Cockpit 12 verbunden. Innerhalb des Vakuumsraumes des Vakuumbehälters 62 können die Schalt- oder Steuerorgane 33 bis 38 und die Steckverbindungen 54, 56 als nicht explosionsgeschützte Bauteile ausgebildet werden, da aufgrund der Konstruktion beim gleichzeitigen Auftreten von zwei Fehlem Innenleck, Außenleck und Zündfunke keine Explosion erfolgen kann.

Wie Figur 1 zeigt, ist die Leitung 42 mit ihrem Ende mit zum Gasraum 30 gerichteter Öffnung 59 in dem tiefkalt verflüssigten Gas 28 angeordnet. Die Öffnung 59 ist von einem über dem Niveau 66 des Kryokraft-stoffes in den Gasraum 30 hineinragende Rohr 60 umgeben. Die Öffnung 59 der Leitung 42 ist als Düse, vorzugsweise als Lavaldüse, ausgebildet, so daß beim Befüllen des Innenbehälters 23 mit tiefkaltem verflüssigtem Kryokraftstoff über die Kryokupplung 61 und die Befülleitung 63 bei geöffneten Schaltorganen 33 und 36 der tiefkalte verflüssigte Kryokraftstoff als Druckstrahl in den Gasraum 30 spritzt. Der Druckstrahl trifft auf die Wand des Innenbehälters 23 und zerfällt in Tropfen. Durch die fein verteilten tiefkalten verflüssigten Gastropfen rekondensiert das im Gasraum befindliche kryogene Gas. Dies führt zum Druckabbau während des Betankungsvorganges.

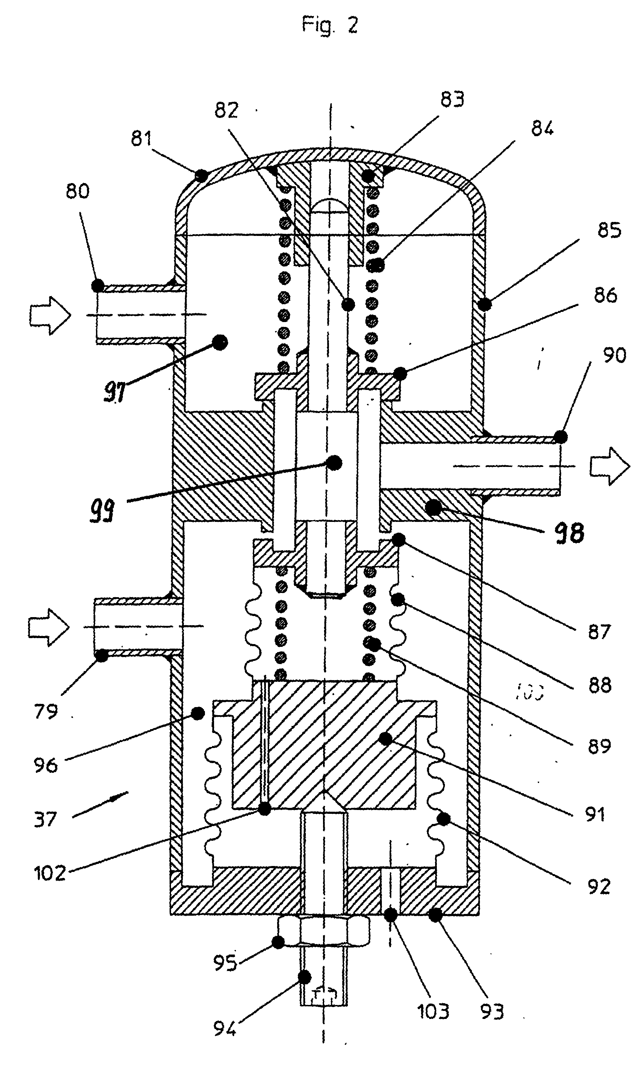

Die gasförmigen Kryokraftstoff führende Leitung 32 und die flüssigen Kryokraftstoff führende Leitung 42 sind jeweils mit dem ersten Eingang 79 beziehungsweise dem zweiten Eingang 80 des druckgesteuerten Steuerorgans 37 verbunden, dessen Ausgang 90 mit der Versorgungsleitung 65 verbunden ist. Die Figur 2 zeigt das im Vakuumraum des Vakuumbehälters 62 angeordnete druckgesteuerte Steuerorgan 37 in vergrößerter schematischer Darstellung. Eingang 79 ist mit einem Gaskryokraftstoff-Raum 96 und Eingang 80 mit einem Flüssigkryokraftstoff-Raum 97 verbunden. Die Räume 96 und 97 sind innerhalb eines in sich geschlossenen Ventilgehäuses ausgebildet, welches aus einem Boden 81, einem Mantel 85 und einer Deckel 93 besteht, die unlösbar miteinander verbunden sind. Zwischen dem Raum 97 und dem Raum 96 ist ein Steg 98 vorgesehen, in welchem ein mit dem Ausgang 90 verbundener Zwischenraum 99 vorgesehen ist, der die Räume 96 und 97 miteinander und mit dem Ausgang 90 verbindet. Am Boden 81, der den Raum 97 stirnseitig begrenzt, ist eine Führungshülse 83 befestigt, in dem ein Führungselement 82 axial beweglich angeordnet ist und an welchem zwei Schließkörper 86 und 87 befestigt sind. Schließkörper 86 ist im Raum 97 und Schließkörper 87 im Raum 96 angeordnet. Zwischen Führungshülse 83 und Schließkörper 86 ist eine Druckfeder 84 angeordnet, die entsprechend ihrer Federkraft, den Schließkörper 86 auf einen am Steg 98 vorgesehenen Ventilsitz drückt und den mit der Leitung 42 für den flüssigen Kryokraftstoff verbundenen Raum 97 gegenüber dem Zwischenraum 99 verschließt. Der im Raum 96 angeordnete und an dem Führungselement 82 befestigte Schließkörper 87 wird ebenfalls von einer Feder 89 in Richtung eines zweiten, am Steg 98 vorgesehenen, Ventilsitzes gedrückt. Als Gegenlager für die Feder ist ein Druckkörper 91 vorgesehen, welcher mit dem im Deckel 93 angeordneten Einstellelement 94 mit Befestigungsmittel 95 zusammenwirkt. Mit dem Einstellelement 94 kann der Druckkörper 91 in axialer Richtung verstellt werden und damit die Kraft der Feder 89 erhöht oder erniedrigt werden. Die Feder 89 ist innerhalb eines metallischen Balges 88 angeordnet der am Schließkörper 87 und am Druckkörper 91 befestigt ist. Weiterhin ist ein metallischer Balg 92 zwischen Druckkörper 91 und Deckel 93 vorgesehen. Eine im Druckkörper 91 angeordnete Durchgangsbohrung 102 verbindet die beiden von den Bälgen 88 und 92 umschlossene Räume. Eine den Deckel 93 durchdringende Bohrung 103 verbindet die Räume mit dem Vakuumraum 62.

Nach dem Ausgang 90 ist in der Versorgungsleitung 65 ein mittels elektrischer oder elektromagnetischer Signale ansteuerbares Schaltorgan 34 vorgesehen. Ein weiteres mittels elektrischer oder elektromagnetischer Signale ansteuerbares Schaltorgan 35 ist vor dem Eingang 80 in der Leitung 42 angeordnet.

Die Einrichtung 10 arbeitet im Fahrbetrieb wie folgt:

Das Drehen des Zündschlüssels schaltet die Schaltorgane 34 und 35 auf. Das als Druckregler ausgebildete druckgesteuerte Steuerorgan 37 ist über das Steuerelement 94 auf einen festen Betriebsdruck von beispielsweise 2,5 bar eingestellt. Unterhalb dieses Betriebsdruckes liegt der Schließkörper 87 auf dem Ventilsitz auf und dichtet den Raum 96 gegenüber dem Ausgang 90 ab. Über Leitung 42 wird dem Kryotank flüssiger Kryokraftstoff 28 entnommen. Der tiefkalte verflüssigte Kryokraftstoff strömt durch das Schaltorgan 35 zu dem Eingang 80 und in den Raum 97. Da bei einem Betriebsdruck kleiner 2,5 bar der Schließkörper 86 von dem Ventilsitz entfernt ist, strömt der flüssige Kryokraftstoff in den Zwischenraum 99 und von dem Ausgang 90 über das geöffnete Schaltorgan 34 zu der Verdampfereinheit 19. Steigt der Druck im Gasraum 30 und in dem über Leitung 32 damit verbundenen Raum 96 des Steuerorgans 37 über 2,5 bar entfernt sich der Schließkörper 87 soweit vom Ventilsitz bis der im Raum 97 angeordnete Schließkörper 86 auf dem Ventilsitz anliegt und den mit der flüssigen Kryokraftstoff fördernden Leitung 42 verbundenen Raum 97 verschließt.

Gasförmiger Kryokraftstoff strömt nun aus dem Raum 96 in den Zwischenraum 99 und zu dem Ausgang 90. Über die Versorgungsleitung 85 strömt der gasförmige Kryokraftstoff zu der Verdampfereinheit 19 und zu dem Verbraucher 22. Sinkt der Druck im Gasraum 20 unter 2,5 bar verringert sich die auf die ringförmige Schließfläche des Schließkörpers 87 wirkende Kraft, der Schließkörper 87 kommt zur Anlage auf dem Ventilsitz 100 und öffnet dabei die Verbindung zwischen Raum 97 und Zwischenraum 99.

Der Betriebsdruck wird so auf einem voreinstellbaren Wert konstant gehalten. Sinkt der Betriebsdruck wesentlich unter 2,5 bar ab, so wird über einen in der Verdampfereinheit 19 vorgesehenen Druckschalter 11 die Heizung 29, beispielsweise über ein Relais, zugeschaltet. Über den in der Sicherheitsventilleitung 15 angeordneten Drucktransmitter 78 wird der anstehende Betriebsdruck direkt auf die Anzeige 13 geschaltet.

Nach einem weiteren Ausführungsbeispiel ist an dem Boden 77 des Außenbehälters 24 eine weitere Vakuumkammer 64 vorgesehen in der ein druckgesteuertes zweites Steuerorgan 40 vorgesehen ist, das in seinem Aufbau mit dem vorstehend beschriebenen Steuerorgan 37 identisch ist. Ein erster Eingang 79.1 des Steuerorgans 40 ist mit einer Leitung 32.1 verbunden, die in den Gasraum 30 und dessen zweiter Eingang 80.1 ist mit einer Leitung 42.1 verbunden, die in den tiefkalten verflüssigten Kryokraftstoff des Innenbehälters 23 mündet. Der Ausgang 90.1 des Steuerorgans 40 ist über Verbindungsleitung 58 und Schaltorgan 38 nach dem Steuerorgan 34 mit der Versorgungsleitung 65 verbunden. Vor dem Eingang 80.1 ist in der Leitung 42.1 ein weiteres Steuerorgan 39 angeordnet. Die Leitungen 32 und 32.1 und die Leitungen 42 und 42.1 stehen mit der Flüssig- bzw. Gasphase in voneinander entfernten Bereichen des Innenbehälters 23 in Verbindung.

Mittels der Schaltorgane 38, 39 und des Steuerorgans 40 kann, wie bereits vorstehend beschrieben, der Versorgungsleitung 65 gasförmiger oder flüssiger Kryokraftstoff selbstregelnd zugeführt werden.

Beiden Endbereichen des Innenbehälters 23 sind Füllstandssensoren 31 bzw. 31.1 zugeordnet die mit einer Steuerung 57 verbunden sind die nur schematisch dargestellt ist. Die elektrischen Leitungen der Füllstandssensoren 31 und 31.1 sind entsprechend der schematisch dargestellten Leitung 52 über die gasführende Leitung 32 und Steckverbindung 54, Verbindungsleitung 55, Steckverbindung 56 zu der Steuerung 57 geführt. In der Steuerung 57 wird die Füllstandsdifferenz ermittelt und in Abhängigkeit hiervon die Schaltorgane 38, 39 bzw. 34, 35 mittels elektrischer oder elektromagnetischer Signale geschaltet.

Durch die vorstehend beschriebene Ausbildung der Erfindung ergibt sich vorteilhaft die Möglichkeit, Kryokraftstoff aus der Gas- oder Flüssigphase aus beiden Endbereichen des Kryotanks zu entnehmen. Bei Schrägstellung der Einrichtung 10, beispielsweise an Gefällstrecken, die mit einem Kraftfahrzeug befahren werden, wird über die Füllstandssensoren 31 und 31.1 die Füllstandsdifferenz erfaßt und bei einem Betriebsdruck von größer 2,5 bar, die jeweils in der Gasphase angeordnete Leitung 32 oder 32.1 zu der Versorgungsleitung 65 freigegeben. Hierdurch wird gewährleistet, daß insbesondere bei langen schlanken Kryotanks eine Entnahme aus der Gas- oder Flüssigphase auch bei Schrägstellung erfolgen kann.

## Patentansprüche

1. Einrichtung zum Versorgen eines Verbrauchers mit Kryokraftstoff aus einem Kryotank, mit einem Außenbehälter (24) und einem Innenbehälter (23), der innerhalb des Außenbehälters (24) so angeordnet ist, daß zwischen beiden Behältern (24, 23) ein den Innenraum umschließender evakuierter Isolationsraum (25) vorhanden ist, durch den im Innenbehälter (23) angeordnete Leitungen zu einem außerhalb des Außenbehälters (24) angeordneten ersten druckgesteuerten Steuerorgan (37) geführt sind, welche Leitungen aus mindestens einer gasförmigen Kryokraftstoff führenden Leitung (32) mit einem Ende jeweils oberhalb und mindestens einer flüssigen Kryokraftstoff führenden Leitung (42) mit einem jeweils unterhalb des Niveaus des tiefkalten flüssigen Kryokraftstoffes (28) im Innenbehälter (23) abgeordneten Ende bestehen, welches Steuerorgan (37) seinerseits mit einem, mit einer Versorgungsleitung (65) zum Verbraucher verbundenen Ausgang (90), sowie mit einem ersten und zweiten Eingang (79, 80) versehen ist, wobei der erste Eingang (79) mit dem anderen Ende der gasförmigen Kryokraftstoff führenden Leitung (32), und der zweite Eingang (80) mit dem anderen Ende der flüssigen Kryokraftstoff führenden Leitung (42) verbunden sind,
**dadurch gekennzeichnet, daß**
ein zweites Steuerorgan (40) vorgesehen ist, dessen Ausgang (90.1) mit der Versorgungsleitung (65) zum Verbraucher, dessen erster Eingang (79.1) mit einer weiteren gasförmigen Kryokraftstoff führenden Leitung (32.1) und dessen zweiter Eingang (80.1) mit einer weiteren flüssigen Kryokraftstoff führenden Leitung (42.1) verbunden sind.

2. Einrichtung nach Anspruch 1
**dadurch gekennzeichnet, daß** jeweils jedes druckgesteuerte Steuerorgan (37, 40) ein mit seinem ersten Eingang (79, 79.1) verbundener Gaskryokraftstoff-Raum (96), ein mit seinem zweiten Eingang (80, 80.1) verbundener Flüssigkryokraftstoff-Raum (97), sowie ein zwischen dem Gaskryokraftstoff-Raum (96) und dem Flüsslgkryokraftstoff-Raum (97) liegenden und mit seinem Ausgang (90, 90.1) verbundenen Zwischenraum (99) aufweist, welcher in Abhängigkeit vom Druck im Gaskryokraftstoff-Raum (96) über zwei miteinander verbundene Schließkörper (86, 87) mit dem Gaskryokraftstoff-Raum (96) oder dem Flüssigkryokraftstoff-Raum (97) verbindbar ist.

3. Einrichtung nach Anspruch 1 oder 2
**dadurch gekennzeichnet, daß**
vor dem zweiten Eingang (80) des ersten druckgesteuerten Steuerorgans (37) eine Befüllleitung (63) an die entsprechende, den flüssigen Kryokraftstoff führende Leitung (42) angeschlossen ist, in der ein Schaltorgan (36) zum Absperren oder Öffnen der Befüllleitung (63) angeordnet ist.

4. Einrichtung nach einem der Ansprüche 1 bis 3
**dadurch gekennzeichnet, daß**
zwischen dem zweiten Eingang (80) des ersten druckgesteuerten Steuerorgans (37) und der Befüllleitung (63) ein Schaltorgan (35) zum Absperren oder Öffnen der den flüssigen Kryokraftstoff führenden Leitung (42) angeordnet ist.

5. Einrichtung nach einem der Ansprüche 1 bis 4,
**dadurch gekennzeichnet, daß**
in der Versorgungsleitung (65) ein Schaltorgan (34) dem Ausgang (90) des ersten druckgesteuerten Steuerorgans (37) nachgeschaltet ist.

6. Einrichtung nach einem der Ansprüche 1 bis 5
**dadurch gekennzeichnet, daß**
das zweite druckgesteuerte Steuerorgan (40) über eine Verbindungsleitung (58) mit der Versorgungsleitung (65) verbunden ist.

7. Einrichtung nach Anspruch 6
**dadurch gekennzeichnet, daß**
in der Verbindungsleitung (58) ein Schaltorgan (38) zum Absperren oder Öffnen und in der flüssigen Kryokraftstoff führenden Leitung (42.1) ein weiteres Schaltorgan (39) angeordnet sind.

8. Einrichtung nach einem der Ansprüche 1 bis 7
**dadurch gekennzeichnet, daß**
die gas- und flüssigförmigen Kryokraftstoff führenden Leitungen (32, 42; 32.1, 42.1), die Verbindungsleitung (58), die Schaltorgane (34,35,36,38,39) sowie die druckgesteuerten Steuerorgane (37,40) in mindestens einem Vakuumbehälter (62, 64) angeordnet sind.

9. Einrichtung nach Anspruch 8,
**dadurch gekennzeichnet, daß**
der Vakuumbehälter (62, 64) mit dem Außenbehälter (24) des Kryotanks verbunden ist.

10. Einrichtung nach Anspruch 8 oder 9,
**dadurch gekennzeichnet, daß**
ein Außenboden (43, 77) des Außenbehälters (24) den Vakuumbehälter (62, 64) begrenzt und die gas- und flüssigförmigen Kryokraftstoff führenden Leitungen (32, 32.1; 42, 42.1) durch den Außenboden (43, 77) geführt sind.

11. Einrichtung nach einem der Ansprüche 8 bis 10,
**dadurch gekennzeichnet, daß**
ein Boden des Außenbehälters (24) den Vakuumbehälter (62, 64) begrenzt und der Vakuumbehälter (62, 64) unlösbar mit dem Außenbehälter (24) verbunden ist.

12. Einrichtung nach einem der Ansprüche 1 bis 11,
**dadurch gekennzeichnet, daß**
in dem Innenbehälter (23) zwei Füllstandssensoren (31, 31.1) angeordnet sind, die mit einer Steuerung (57) verbunden sind, die in Abhängigkeit von der Füllstandsdifferenz die Schaltorgane (34, 35; 38, 39) öffnet.

## Claims

1. Device for supplying a consumer with cryofuel from a cryotank, with an outer vessel (24) and an inner vessel (23) which is arranged within the outer vessel (24) in such a way that, between the two vessels (24, 23), there is an evacuated insulating space (25) which surrounds the inner space and through which lines arranged in the inner vessel (23) are led to a first pressure-controlled control member (37) arranged outside the outer vessel (24), which lines consist of at least one line (32) carrying gaseous cryofuel, with one end in each case above the level of the low-temperature liquid cryofuel (28) in the inner vessel (23), and of at least one line (42) carrying liquid cryofuel, with one end in each case arranged below the said level, which control member (37), in turn, is provided with an outlet (90) connected to a supply line (65) to the consumer and with a first and a second inlet (79, 80), the first inlet (79) being connected to the other end of the line (32) carrying gaseous cryofuel and the second inlet (80) being connected to the other end of the line (42) carrying liquid cryofuel, **characterized in that** a second control member (40) is provided, the outlet (90.1) of which is connected to the supply line (65) to the consumer, the first inlet (79.1) of which is connected to a further line (32.1) carrying gaseous cryofuel and the second inlet (80.1) of which is connected to a further line (42.1) carrying liquid cryofuel.

2. Device according to Claim 1, **characterized in that** in each case each pressure-controlled control member (37, 40) has a gaseous-cryofuel space (96) connected to its first inlet (79, 79.1), a liquid-cryofuel space (97) connected to its second inlet (80, 80.1) and an interspace (99) which lies between the gaseous-cryofuel space (96) and the liquid-cryofuel space (97) and is connected to its outlet (90, 90.1) and which is connectable to the gaseous-cryofuel space (96) or to the liquid-cryofuel space (97) via two interconnected closing bodies (86, 87) as a function of the pressure in the gaseous-cryofuel space (96).

3. Device according to Claim 1 or 2, **characterized in that**, upstream of the second inlet (80) of the first pressure-controlled control member (37), a filling line (63) is connected to the corresponding line (42) carrying the liquid cryofuel, in which line (42) a switching member (36) for shutting off or opening the filling line (63) is arranged.

4. Device according to one of Claims 1 to 3, **characterized in that** a switching member (35) for shutting off or opening the line (42) carrying the liquid cryofuel is arranged between the second inlet (80) of the first pressure-controlled control member (37) and the filling line (63).

5. Device according to one of Claims 1 to 4, **characterized in that** the outlet (90) of the first pressure-controlled control member (37) is followed, in the supply line (65), by switching member (34).

6. Device according to one of Claims 1 to 5, **characterized in that** the second pressure-controlled control member (40) is connected to the supply line (65) via a connecting line (58).

7. Device according to Claim 6, **characterized in that** a switching member (38) for shutting off or opening is arranged in the connecting line (58) and a further switching member (39) is arranged in the line (42.1) carrying liquid cryofuel.

8. Device according to one of Claims 1 to 7, **characterized in that** the lines (32, 42; 32.1, 42.1) carrying gaseous and liquid cryofuel, the connecting line (58), the switching members (34, 35, 36, 38, 39) and the pressure-controlled control members (37, 40) are arranged in at least one vacuum vessel (62, 64).

9. Device according to Claim 8, **characterized in that** the vacuum vessel (62, 64) is connected to the outer vessel (24) of the cryotank.

10. Device according to Claim 8 or 9, **characterized in that** an outer bottom (43, 77) of the outer vessel (24) delimits the vacuum vessel (62, 64) and the lines (32, 32.1; 42, 42.1) carrying gaseous and liquid cryofuel are led through the outer bottom (43, 77).

11. Device according to one of Claims 8 to 10, **characterized in that** a bottom of the outer vessel (24) delimits the vacuum vessel (62, 64) and the vacuum vessel (62, 64) is connected unreleasably to the outer vessel (24).

12. Device according to one of Claims 1 to 11, **characterized in that** the inner vessel (23) has arranged in it two filling-level sensors (31, 31.1) connected to a control (57) which opens the switching members (34, 35; 38, 39) as a function of the filling-level difference.

## Revendications

1. Installation d'alimentation d'un consommateur en propergol cryogénique à partir d'un réservoir de cryogène doté d'un récipient extérieur (24) et d'un récipient intérieur (23) disposé dans le récipient extérieur (24) de manière à ce qu'il y ait entre les deux récipients (24, 23) un espace d'isolation (25) de vide entourant l'intérieur et traversé par les conduites disposées dans le récipient intérieur (23) vers un premier organe de commande (37) commandé par pression et disposé à l'extérieur du récipient extérieur (24), les conduites se composant d'au moins une conduite (32) transportant du propergol cryogénique gazeux et d'au moins une conduite (42) transportant du propergol cryogénique liquide, l'une des extrémités de la première se trouvant au-dessus du niveau du propergol cryogénique liquide frigorifié (28) dans le récipient intérieur (23) et l'une des extrémités de la seconde se trouvant en dessous de ce niveau, dont l'organe de commande (37) est doté d'une sortie (90) reliée à une conduite d'alimentation (65) conduisant au consommateur ainsi que d'une première et d'une deuxième entrée (79, 80), la première entrée (79) étant reliée à l'autre extrémité de la conduite (32) transportant du propergol cryogénique gazeux et la deuxième entrée (80) étant reliée à l'autre extrémité de la conduite (42) transportant du propergol cryogénique liquide,
**caractérisé par**
un deuxième organe de commande (40) dont la sortie (90.1) est reliée à la conduite d'alimentation (65) conduisant au consommateur, dont la première sortie (79.1) est reliée à une autre conduite (32.1) transportant du propergol cryogénique gazeux et dont la deuxième entrée (80.1) est reliée à une autre conduite (42.1) transportant du propergol cryogénique liquide.

2. Installation selon la revendication 1,
**caractérisé en ce que**
chaque organe de commande (37, 40) commandé par pression présente un espace de propergol cryogénique gazeux (96) relié à sa première entrée (79, 79.1), un espace de propergol cryogénique liquide (97) relié à sa deuxième entrée (80, 80.1) ainsi qu'un espace intermédiaire (99) situé entre l'espace de propergol cryogénique gazeux (96) et l'espace de propergol cryogénique liquide (97) et relié à sa sortie (90, 90.1), cet espace intermédiaire pouvant être relié à l'espace de propergol cryogénique gazeux (96) ou à l'espace de propergol cryogénique liquide (97), en fonction de la pression dans l'espace de propergol cryogénique gazeux (96), via deux corps de fermeture (86, 87) raccordés l'un à l'autre.

3. Installation selon la revendication 1 ou 2,
**caractérisée en ce que**
avant la deuxième entrée (80) du premier organe de commande (37) commandé par pression, une conduite de remplissage (63) est raccordée à la conduite correspondante (42) transportant du propergol cryogénique liquide dans laquelle est disposé un organe de commutation (36) permettant de bloquer ou d'ouvrir la conduite de remplissage (63).

4. Installation selon les revendications 1 à 3,
**caractérisée en ce qu'**
un organe de commutation (35) permettant de bloquer ou d'ouvrir la conduite (42) transportant le propergol cryogénique liquide est disposé entre la deuxième entrée (80) du premier organe de commande (37) commandée par pression et la conduite de remplissage (63).

5. Installation selon l'une des revendications 1 à 4,
**caractérisée en ce qu'**
un organe de commutation (34) est intercalé dans la conduite d'alimentation (65) à la suite de la sortie (90) du premier organe de commande (37) commandé par pression.

6. Installation selon l'une des revendications 1 à 5,
**caractérisée en ce que**
le deuxième organe de commande (40) commandé par pression est relié à une conduite d'alimentation (65) via une conduite de raccordement (58).

7. Installation selon la revendication 8,
**caractérisée en ce qu'**
un organe de commutation (38) pour le blocage ou l'ouverture est disposé dans la conduite de raccordement (58) et qu'un autre organe de commutation (39) est disposé dans la conduite (42.1) transportant du propergol cryogénique liquide.

8. Installation selon les revendications 1 à 7,
**caractérisée en ce que**
les conduites (32, 42 ; 32.1, 42.1) transportant du propergol cryogénique liquide et gazeux, la conduite de raccordement (58), les organes de commutation (34, 35, 36, 38, 39) ainsi que les organes de commande (37, 40) commandés par pression sont disposés dans au moins un réservoir de vide (62, 64).

9. Installation selon la revendication 8,
**caractérisée en ce que**
réservoir de vide (62, 64) est relié au récipient extérieur (24) du réservoir de cryogène.

10. Installation selon la revendication 8 ou 9,
**caractérisée en ce qu'**
un fond extérieure (43, 77) du récipient extérieur (24) limite le réservoir de vide (62, 64) et les conduites (32, 32.1 ; 42, 42.1) transportant le propergol cryogénique gazeux et liquide sont guidées par le fond extérieure (43, 77)

11. Installation selon l'une des revendications 8 à 10,
**caractérisée en ce qu'**
un fond du récipient extérieur (24) limite le réservoir à vide (62, 64) et le réservoir à vide (62, 64) est relié de façon fixe au récipient extérieur (24).

12. Installation selon l'une des revendications 1 à 11,
**caractérisé en ce que**
deux capteurs de niveau (31, 31.1) sont disposés dans le récipient intérieur (23), lesquels capteurs sont reliés à une commande (57) qui ouvre les organes de commutation (34, 35, 38, 39) en fonction de la différence de niveau.
